# EUROPÄISCHE PATENTANMELDUNG

(11) **EP 2 302 982 A2**
(43) Veröffentlichungstag der Anmeldung: **30.03.2011**
(21) Anmeldenummer: 10177459.4
(22) Anmeldetag: 17.09.2010
(51) Int. Cl.: H05B 37/02, H05B 33/08

(54) **Dimmbare Lichterkette und Schaltung hierfür**

(30) Priorität: 18.09.2009 DE 102009044058
(71) Anmelder: Müller, Dietmar, 92521 Schwarzenfeld (DE)
(72) Erfinder: Müller, Dietmar, 92521 Schwarzenfeld (DE)
(74) Vertreter: Lang, Christian

(57) **Zusammenfassung**

Die vorliegende Erfindung betrifft eine Lichterkette mit einer Vielzahl an Lichtmodulen (13, 130), wobei jedes Lichtmodul mindestens einen Modulträger mit mindestens einer Lichtquelle (14, 140) und mindestens einer elektrischen Schaltung umfasst, wobei die Schaltung mindestens zwei Anschlüsse zur elektrischen Energieversorgung der Lichtquelle aufweist, wobei die Schaltung weiterhin mindestens einen Anschluss für eine Steuerleitung (21, 22, 23, 24; 210, 220) aufweist, und wobei mittels der Steuerleitung die Energieversorgung der Lichtquelle gesteuert werden kann. Die Erfindung betrifft ferner eine Schaltung für das Dimmen mindestens einer Lichtquelle (61, 62, 63, 64), insbesondere LED (Licht emittierende Diode), mit einem Operationsverstärker (70) und einem Transistor (80), wobei der Transistor (80) mit seiner Basis mit dem Ausgang des Operationsverstärkers verbunden ist, und wobei der Emitter (83) des Transistors mit dem negativen Eingang (71) des Operationsverstärkers rückgekoppelt ist und der positive Eingang (72) des Operationsverstärkers mit einer variabel einstellbaren Spannungsquelle verbunden ist.

## Beschreibung

### GEBIET DER ERFINDUNG

Die vorliegende Erfindung betrifft eine Lichterkette mit einer Vielzahl an Lichtmodulen, wobei jedes Lichtmodul mindestens einen Modulträger mit mindestens einer Lichtquelle und mindestens einer elektrischen Schaltung umfasst, sowie eine entsprechende Schaltung.

### STAND DER TECHNIK

Aus dem Stand der Technik sind Lichterketten zur Beleuchtung von Reklameschriften bekannt. Derartige Lichterketten werden beispielsweise in den Buchstaben einer Werbeschrift angeordnet, um die Leuchtbuchstaben auszuleuchten. Entsprechende Lichterketten bestehen üblicherweise aus einer Vielzahl an Lichtmodulen, die über elektrische Versorgungsleitungen flexibel miteinander verbunden sind, so dass die einzelnen Lichtmodule in bestimmten Grenzen flexibel angeordnet werden können, um so an die Form verschiedener Reklameschriften angepasst werden zu können. Die Lichtmodule umfassen üblicherweise eine Platine oder Leiterplatte, auf der ein entsprechendes Leuchtmittel, wie beispielsweise eine LED, angeordnet ist und mit entsprechender Energie versorgt wird. Auf der Leiterplatte bzw. Platine kann eine Schaltung vorgesehen sein, um den Stromdurchfluss durch die Lichtquelle konstant einzustellen.

Die Lichtleistung der Lichtmodule bei derartigen bekannten Lichterketten hängt im Wesentlichen davon ab, welche Spannung die Spannungsquelle zur Verfügung stellt bzw. durch die Schaltung auf dem Lichtmodul zugelassen wird. Nachteilig bei derartigen bekannten Lichterketten ist außerdem, dass diese lediglich mit einer einzigen fest vorgegebenen Lichtleistung betrieben werden können.

### OFFENBARUNG DER ERFINDUNG

### AUFGABE DER ERFINDUNG

Es ist Aufgabe der vorliegenden Erfindung, eine Lichterkette bereitzustellen, welche in einfacher Weise eine Steuerung bzw. Regelung der Strahlungsleistung bzw. Lichtstärke der Lichtquellen, also eine entsprechende Dimmung ermöglicht. Hierbei soll der Aufwand für die Lichterkette niedrig gehalten werden und die Bedienung einfach sein.

### TECHNISCHE LÖSUNG

Diese Aufgabe wird gelöst durch eine Lichterkette mit den Merkmalen des Anspruchs 1 sowie eine entsprechende Schaltung hierfür mit den Merkmalen des Anspruchs 17. Vorteilhafte Ausgestaltungen sind Gegenstand der abhängigen Ansprüche.

Gemäß der vorliegenden Erfindung wird eine Lichterkette vorgeschlagen, bei der neben den Versorgungsleitungen zur elektrischen Energieversorgung der Vielzahl an Lichtmodulen mindestens eine Steuerleitung zur Steuerung der Lichtleistung vorgesehen wird. Mittels der Steuerleitung kann die Energieversorgung von mindestens einer Lichtquelle auf einem Lichtmodul ermöglicht werden, ohne dass aufwändige Spannungs- bzw. Stromregelungen an der Energiequelle, z. B. Versorgungsnetzteilen, erforderlich wäre. Stattdessen findet die Leistungssteuerung über die Steuerleitung bei jedem Lichtmodul statt.

Anstelle von einer Steuerleitung für alle Lichtmodule der Lichterkette kann für jedes Lichtmodul eine eigene Steuerleitung vorgesehen werden oder jeweils eine Steuerleitung für mehrere Lichtmodule, die in Gruppen zusammen gefasst sind. Entsprechend können alle Lichtquellen der Lichterkette entweder gemeinsam oder jede Lichtquelle kann einzeln gedimmt werden. Darüber hinaus können mehrere Lichtquellen in Gruppen zusammen gedimmt werden.

Die Lichterkette kann so ausgebildet sein, dass über die Steuerleitung eine variabel einstellbare elektrische Spannung bereitgestellt wird, welche die Steuerung der Lichtleistung ermöglicht. Die einstellbare elektrische Spannung kann im Bereich von 0 V bis 100V, insbesondere 0 V bis 20 V, vorzugsweise 0 bis 10 V variierbar sein.

Entsprechend kann die Lichterkette eine Steuer- und/oder Regelungseinrichtung umfassen, die eine entsprechende Variation des angelegten Potentials an der oder den Steuerleitungen ermöglicht.

Ist jedes Lichtmodul einzeln steuerbar oder sind Gruppen von Lichtmodulen einzeln steuerbar, so können entsprechend Lauflichter verwirklicht werden, da eine zeitlich versetzte Ansteuerung der Lichtmodule möglich ist.

Darüber hinaus kann eine automatische Regelung der Lichtleistung der Lichterkette bzw. einzelner Lichtmodule ermöglicht werden. So können beispielsweise Sensoren vorgesehen sein, die die Umgebungshelligkeit bestimmen und entsprechend der Helligkeit die Leuchtstärke der Lichterkette bzw. einzelner Lichtmodule der Lichterkette steuern bzw. regeln.

Durch das Vorsehen unterschiedlich farbiger Lichtquellen in der Lichterkette bzw. an einem einzelnen Lichtmodul oder über mehrere Lichtmodule verteilt, können unterschiedliche Farben dadurch erzielt werden, dass die verschiedenen farbigen Lichtquellen unterschiedlich stark leuchten, so dass sich unterschiedliche Farbmischungen ergeben.

Um mit geringen Steuerleistungen von beispielsweise 1 bis 10 V bei 0,02 mA je Modul lange Leitungswege für die Lichterketten zu ermöglichen, kann eine Schaltung für das Dimmen einer Lichtquelle auf jedem Lichtmodul vorgesehen sein, für welche unabhängig und separat Schutz begehrt wird.

Eine erfindungsgemäße Schaltung umfasst einen Operationsverstärker und einen Transistor, wobei der Transistor mit seiner Basis am Ausgang des Operationsverstärkers angeschlossen ist. Der Emitter des Transistors ist wiederum mit dem negativen Eingang des Operationsverstärkers rückgekoppelt, während der positive Eingang des Operationsverstärkers mit dem variabel einstellbaren Potential der Steuerleitung verbunden ist. Auf diese Weise lässt sich durch geringfügige Potentialveränderung an der Steuerleitung, beispielsweise im Berech von 0 bis 10 V, der Durchgangswiderstand des Transistors so verändern, dass am Kollektor angeschlossene Lichtquellen, wie beispielsweise Leuchtdioden, unterschiedlich stark leuchten.

Bei der Schaltung für das Dimmen einer Lichtquelle kann der Operationsverstärker mit einem seiner Versorgungsanschlüsse an dem Potential einer Spannungsquelle angeschlossen sein, welche identisch mit der Energiequelle für die Leuchtmodule sein kann. Entsprechend können parallel zum Anschluss der Spannungsquelle an einem Versorgungsanschluss des Operationsverstärkers eine oder mehrere Lichtquellen und der Kollektor des Transistors geschaltet sein. Parallel hierzu können weiterhin ein Eingangswiderstand und der negative Eingang des Operationsverstärkers geschaltet sein. Durch die Rückkopplung des Emitters des Transistors mit dem negativen Eingang des Operationsverstärkers kommt es abhängig von dem Potential der Steuerleitung zu einer definierten Einstellung der Lichtleistung der Lichtquellen.

Der positive Eingang des Operationsverstärkers kann über eine Spannungsteilerschaltung mit mindestens zwei ohmschen Widerständen mit entsprechender Spannung versorgt werden.

Zwischen einer ersten Versorgungsleitung (Außenleiter bzw. Polleiter) mit dem Potential der Energiequelle und dem Neutralleiter kann in Reihe zur Parallelschaltung von Eingangswiderstand des Operationsverstärkers und Lichtquelle ein Abschlusswiderstand vorgesehen sein.

### KURZBESCHREIBUNG DER FIGUREN

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Die Zeichnungen zeigen hierbei in rein schematischer Weise in
- Figur 1: eine Darstellung eines Leuchtreklamebuchstabens mit einer erfindungsgemäßen Lichterkette;
- Figur 2: eine Ansicht einer ersten Ausführungsform einer erfindungsgemäßen Lichterkette;
- Figur 3: eine Darstellung einer zweiten Ausführungsform einer erfindungsgemäßen Lichterkette; und in
- Figur 4: eine Darstellung einer erfindungsgemäßen Schaltung auf einem Lichtmodul einer erfindungsgemäßen Lichterkette.

### AUSFÜHRUNGSBEISPIELE

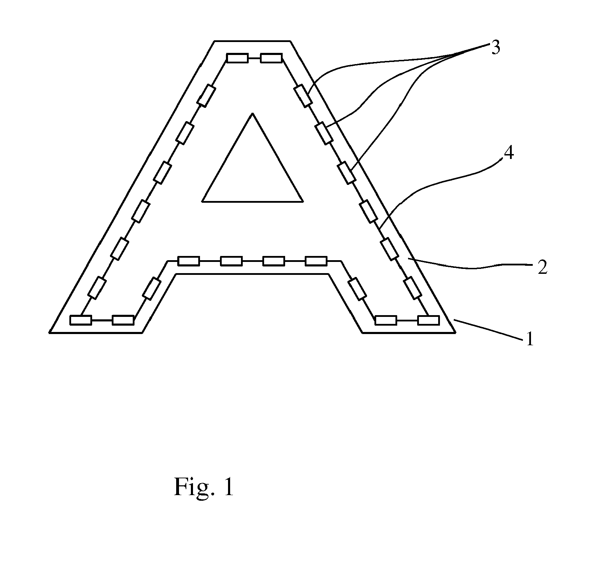

Die Figur 1 zeigt eine Draufsicht auf einen Buchstaben 1 einer Leuchtreklame, nämlich den Buchstaben A. Der Buchstabe 1 der Leuchtreklame ist ohne Abdeckung dargestellt, so dass die in seinem Inneren angeordnete Lichterkette 2, die zur Beleuchtung und Ausstrahlung des Buchstabens 1 dient, zu sehen ist.

Die Lichterkette 2 ist aus einer Vielzahl von Lichtmodulen 3 gebildet, die über eine, insbesondere mehradrige Leitung 4 oder mehrere separate Leitungen miteinander verbunden sind.

Die Verbindung der Lichtmodule 3 ist flexibel ausgestattet, so dass die Lichterkette 2 entsprechend der Form des auszuleuchtenden Buchstabens 1 entlang einer beliebig geformten Linie angeordnet ist. Wie am Beispiel des Buchstabens A in Figur 1 gezeigt, kann die Lichterkette 2 beispielsweise entlang des Umfangs am Rand des Buchstabens 1 angeordnet sein, um eine gleichmäßige Ausleuchtung des Buchstabens 1 zu ermöglich. Zusätzlich zu der gezeigten Lichterkette 2 können weitere Lichterketten oder eine längere Lichterkette in dem Buchstaben 1 angeordnet sein, um eine möglichst gleichmäßige Verteilung der Lichtmodule 3 in dem Buchstaben 1 zu erreichen.

Auf den Lichtmodulen 3 ist jeweils mindestens eine Lichtquelle, insbesondere eine LED (Licht emittierende Diode) angeordnet, die über die Leitung bzw. Leitungen 4 mit Energie versorgt und entsprechend gesteuert und/oder geregelt wird.

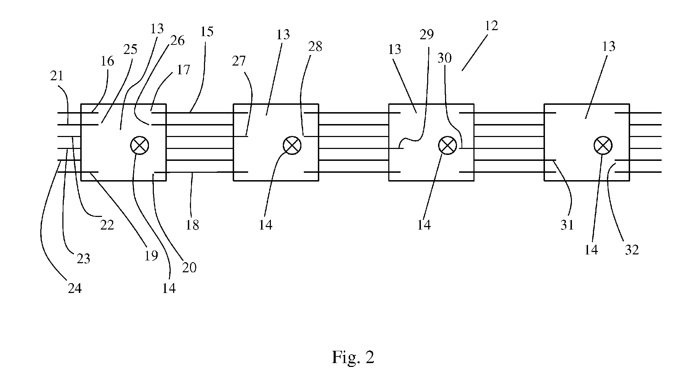

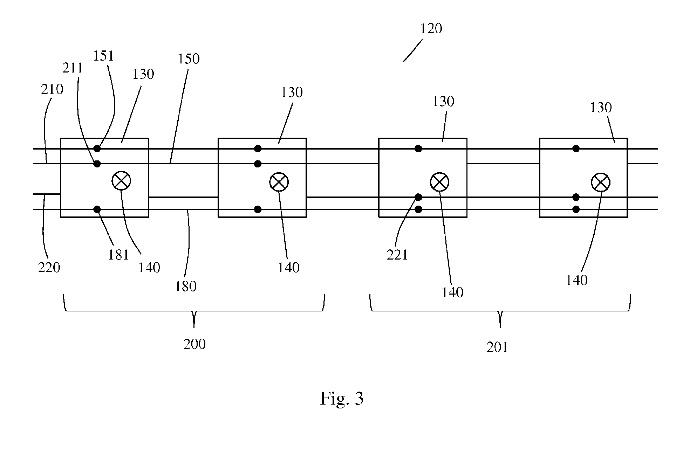

Die Figuren 2 und 3 zeigen zwei Ausführungsbeispiele einer Lichterkette 12 bzw. 120 mit jeweils vier Lichtmodulen, wie sie bei der Anwendung, die in Figur 1 dargestellt ist, eingesetzt werden können. Die Lichterketten 12, 120 sind selbstverständlich nicht auf die Anzahl von vier Lichtmodulen beschränkt, sondern es können mehr oder weniger Lichtmodule in einer Lichterkette vorgesehen sein.

Bei der Lichterkette 12 der Figur 2 sind die verschiedenen Lichtmodule 13 durch Leiterplatten gebildet, auf denen die Lichtquellen in Form von LEDs 14 und eine entsprechende Schaltung (nicht gezeigt) angeordnet sind. Die Schaltungen können als gedruckte Leiterbahnen oder in jeder anderen geeigneten Weise, beispielsweise als integrierte Schaltkreise oder dergleichen, verwirklicht sein.

Wie sich aus der Figur 2 ergibt, sind die einzelnen Lichtmodule 13 über eine erste Versorgungsleitung 15 und eine zweite Versorgungsleitung 18 miteinander verbunden. Die Versorgungsleitungen 15 und 18 sind jeweils durch zwei Anschlüsse 16 und 17 bzw. 19 und 20 mit der Schaltung auf den Lichtmodulen verbunden (nicht gezeigt).

Die erste Versorgungsleitung 15 ist bei dem gezeigten Ausführungsbeispiel als Außenleiter bzw. Polleiter ausgeführt, an welchem ein bestimmtes Potential der Energie- bzw. Spannungsquelle angelegt ist. Die zweite Versorgungsleitung 18 ist in dem gezeigten Ausführungsbeispiel als Neutralleiter geschaltet.

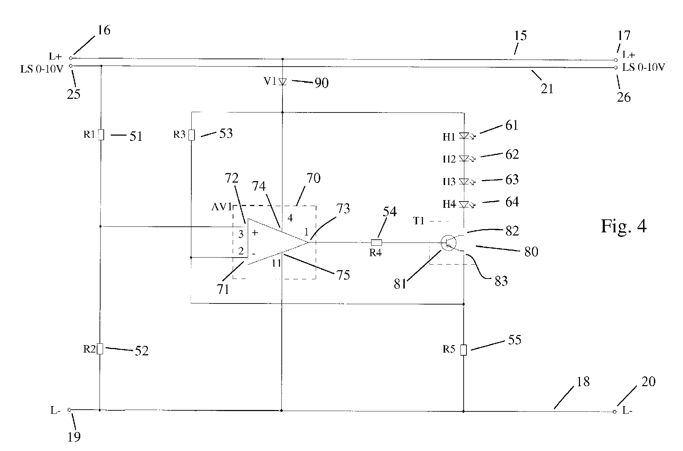

Wie sich nachfolgend aus der Figur 4 ergibt, sind die Schaltungen auf den Lichtmodulen 13 parallel zueinander geschaltet und über die Versorgungsleitungen 15 und 18 mit der Spannungsquelle verbunden.

Zusätzlich sind bei dem gezeigten Ausführungsbeispiel der Fig. 2 mit vier Lichtmodulen 13 vier Steuerleitungen 21, 22, 23 und 24 vorgesehen, die jeweils ein Lichtmodul 13 steuern. Entsprechend sind die jeweiligen Steuerleitungen 21, 22, 23 und 24 jeweils nur an einem Lichtmodul 13 angeschlossen. Die Steuerleitung 21 ist über die Anschlüsse 25, 26 mit dem ersten Lichtmodul verbunden, während die zweite Steuerleitung 22 über die Anschlüsse 27 und 28 mit dem zweiten Lichtmodul 13 und die dritte Steuerleitung 23 über die Anschlüsse 29 und 30 mit dem dritten Lichtmodul 13 verbunden ist. Die Steuerleitung 24 ist über die Anschlüsse 31 und 32 schließlich mit dem vierten Lichtmodul 13 verbunden.

Bei der in Figur 2 gezeigten Ausführungsform, bei der sowohl die Versorgungsleitungen 15, 18 als auch die Steuerleitungen 21, 22, 23, 24 jeweils mit zwei Anschlüssen an den Lichtmodulen 13 angeschlossen sind, ist ein Teil der jeweiligen Leitung in die Schaltung auf dem Lichtmodul 13 integriert, wie sich später aus der Figur 4 ergeben wird. Bei der zweiten Ausführungsform, die in Figur 3 gezeigt ist, sind die einzelnen Lichtmodule 130 jeweils nur mit einer einzelnen Anschlussstelle 151 bzw. 181 mit den Versorgungsleitungen 150 und 180 verbunden. Entsprechend ist die Schaltung auf den Lichtmodulen 130 bzgl. der Anschlussgestaltung angepasst. Gleiches gilt für die Steuerleitungen 210, 220 mit den Anschlussstellen 211 und 221. Ansonsten können die Schaltungen auf den Lichtmodulen 130 unverändert entsprechend der Ausführungsform der Lichterkette 12 der Figur 2 ausgeführt sein.

Ein weiterer Unterschied der Lichterkette 120 gegenüber der Lichterkette 12 besteht darin, dass jeweils zwei Lichtmodule 130 zu einer Gruppe 200, 201 zusammengefasst sind. Die jeweiligen Gruppen 200 bzw. 201 werden gemeinsam durch eine Steuerleitung 210, 220 gesteuert bzw. geregelt. Entsprechend ist beispielsweise die Steuerleitung 210 über jeweils einen Anschluss 211 mit den beiden Lichtmodulen 130 der Gruppe 200 verbunden, während die Steuerleitung 220 über jeweils einen Anschluss 221 mit den beiden Lichtmodulen 130 der Gruppe 201 verbunden ist, so dass die jeweiligen Lichtquellen 140 gruppenweise durch eine gemeinsame Ansteuerung bzw. Regelung gesteuert bzw. geregelt werden.

Die Steuerleitungen 21, 22, 23, 24 der Lichterkette 12 aus Figur 2 bzw. die Steuerleitungen 210, 220 der Lichterkette 120 aus Figur 3 sind mit einer Steuer- und/oder Regelungsvorrichtung (nicht gezeigt) verbunden, die es erlaubt, das an den jeweiligen Steuerleitungen anliegende Potential variabel einzustellen. Durch eine Veränderung des Potentials an den Steuerleitungen 21, 22, 23, 24, 210, 220 kann die Energieaufnahme bzw. Leistung der Lichtquellen 14, 140 und somit deren Helligkeit gesteuert bzw. geregelt werden.

Werden beispielsweise Sensoren (nicht gezeigt) vorgesehen, die separat mit der Steuerund/oder Regelungsvorrichtung verbunden sind, so wird über die ermittelten Werte eine Regelung der Helligkeit der Lichtquellen 14, 140 ermöglicht. Beispielsweise können die Sensoren als Helligkeitssensoren ausgebildet sein, die die Helligkeit des Umgebungslichts erfassen und entsprechend der Helligkeit des Umgebungslichts die Leistung und Leuchtstärke der Lichtquellen 14, 140 regeln.

Durch die Möglichkeit, die Lichtquellen 14, 140 einzeln bzw. in Gruppen zu steuern und/oder zu regeln, können sowohl Farbeffekte als auch Lauflichter verwirklicht werden. So können beispielsweise unterschiedlich farbige LEDs als Lichtquellen 14, 140 Verwendung finden, die durch die anpassbare Helligkeit eine einstellbare Farbmischung ermöglichen. Darüber hinaus ist es möglich, die Lichtquellen 14, 140 zeitversetzt leuchten zu lassen, so dass in der Reihenfolge des zeitversetzten Leuchtens das Licht durch die Lichterkette läuft und somit ein Lauflicht erzeugt wird.

Durch die Verwendung von separaten Steuerleitungen 21, 22, 23, 24, 210, 220 ist es auch möglich, die Lichterkette an jeder beliebigen Stelle zu trennen und die entsprechenden freien Enden der Versorgungsleitungen 15, 150, 18, 180 sowie der Steuerleitungen 21, 22, 23, 24, 210, 220 mit der Energiequelle bzw. der Steuer- und/oder Regelungsvorrichtung zu verbinden, so dass eine einfache Verkürzung oder Verlängerung der Lichterkette möglich ist, ohne an Funktonalität einzubüßen.

Um eine sichere Steuerung auch über lange Leitungswege zu ermöglichen, wird die Steuerleitung 21, 22, 23, 24, 210, 220 mit einem geringen Potential im Bereich von 0 bis 10 V beaufschlagt, wobei pro Lichtmodul eine geringe Leistungsaufnahme von 0,01 bis 0,1 W bei 0,02 mA gegeben ist. Um mit einer derartigen niedrigen Steuerleistung eine zuverlässige Veränderung der Lichtleistung der Lichtquellen 14, 140 zu ermöglichen, wird auf den einzelnen Platinen der Lichtmodule 13, 130 eine Schaltung vorgesehen, wie sie in Figur 4 dargestellt ist.

Die in der Figur 4 dargestellte Schaltung entspricht beispielsweise einer Schaltung, wie sie auf einem Lichtmodul 13 der Lichterquelle 12 aus Figur 2 angeordnet sein kann, wobei für die erste Versorgungsleitung 15 und die zweite Versorgungsleitung 18 jeweils zwei Anschlüsse 16 und 17 bzw. 19 und 20 vorgesehen sind und die entsprechenden Versorgungsleitungen 15, 18 einen Teil der Schaltung auf dem Lichtmodul 13 bilden. Gleiches gilt für die entsprechende Steuerleitung 21 mit den beiden Anschlüssen 25 und 26.

Die erste Versorgungsleitung 15 stellt den Außenleiter bzw. Polleiter dar, der auf einem Potential einer Spannungsquelle liegt. Die zweite Versorgungsleitung 18 ist der Neutralleiter. Die Steuerleitung 21 liegt auf einem Potential, welches zwischen 0 und 10 V variabel einstellbar ist.

Die variabel einstellbare Spannung der Steuerleitung 21 wird über einen Spannungsteiler mit den Widerständen 51 und 52 an dem positiven Eingang 72 eines Operationsverstärkers 70 angelegt, mit dessen Ausgang 73 ein Transistor verbunden ist.

Das Potential des Außenleiters 15 wird über die Diode 90 an den ersten Versorgungsanschluss 74 des Operationsverstärkers 70 angelegt, während der zweite Versorgungsanschluss 75 des Operationsverstärkers 70 mit dem Neutralleiter 18 verbunden ist.

Parallel zum Anschluss des Potentials des Außenleiters 15 am Versorgungsanschluss 74 des Operationsverstärkers 70 liegt das selbe Potential an einer Parallelschaltung von einerseits einem Eingangswiderstand 53 des negativen Anschlusses 71 des Operationsverstärkers 70 sowie andererseits den Leuchtdioden 61, 62, 63, 64, die an dem Kollektor 82 des Transistors angeschlossen sind, sowie an einem zur Parallelschaltung in Reihe geschaltetem Abschlusswiderstand 55 an. Die Basis 81 des Transistors 80 ist über einen Widerstand 54 mit dem Ausgang des Operationsverstärkers 70 verbunden, während der Emitter 83 des Transistors mit dem negativen Eingang 71 des Operationsverstärkers 70 rückgekoppelt ist.

Die Parallelschaltung von Eingangswiderstand 53 einerseits und Leuchtdioden 61 bis 64 sowie Transistor 80 andererseits ist schließlich über den Abschlusswiderstand 55 ebenfalls mit dem Neutralleiter 18 verbunden.

Mit dieser Schaltung kann durch eine Veränderung des Potentials an der Steuerleitung 21 der Durchgangswiderstand des Transistors 80 verändert werden, so dass die Leuchtdioden 61 bis 64 mit veränderter Leistung und somit unterschiedlicher Leuchtstärke betrieben werden. Durch die erfindungsgemäße Schaltung ist es möglich, eine niedrige Spannung an der Steuerleitung 21 zur Steuerung zu verwenden, so dass lange Leitungswege kein Problem sind. Durch die erfindungsgemäße Leistungssteuerung sind keine aufwändigen Spannungs- und Stromregelungen bei den Energiequellen, wie beispielsweise Versorgungsnetzteilen, erforderlich.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen oder Änderungen in der Weise möglich sind, dass einzelne Merkmale weggelassen oder andersartige Kombinationen von Merkmalen verwirklicht werden, ohne dass der Schutzbereich, der entsprechend der beigefügten Ansprüche definiert ist, verlassen wird. Insbesondere umfasst die vorliegende Erfindung sämtliche Kombinationen aller vorgestellten Merkmale.

## Patentansprüche

1. Lichterkette mit einer Vielzahl an Lichtmodulen (13, 130), wobei jedes Lichtmodul mindestens einen Modulträger mit mindestens einer Lichtquelle (14, 140) und mindestens einer elektrischen Schaltung umfasst, und wobei die Schaltung mindestens zwei Anschlüsse zur elektrischen Energieversorgung der Lichtquelle aufweist,
**dadurch gekennzeichnet, dass**
die Schaltung weiterhin mindestens einen Anschluss für eine Steuerleitung (21, 22, 23, 24; 210, 220) aufweist, wobei mittels der Steuerleitung die Energieversorgung der Lichtquelle gesteuert werden kann.

2. Lichterkette nach Anspruch 1,
**dadurch gekennzeichnet, dass**
der Modulträger durch eine Platine gebildet ist und/oder die Schaltung auf einer Leiterplatte ausgebildet und/oder als integrierter Schaltkreis ausgeführt ist.

3. Lichterkette nach Anspruch 1 oder 2,
**dadurch gekennzeichnet, dass**
die Lichtmodule (13, 130) durch Versorgungsleitungen (15, 18; 150, 180) untereinander und mit der elektrischen Energiequelle verbunden sind und/oder die Lichtmodule (13, 130) flexibel zueinander sind und so ausgebildet sind, dass sie beliebig zueinander angeordnet werden können, insbesondere in einer beliebig geformten Reihe.

4. Lichterkette nach einem der vorhergehenden Ansprüche,
**dadurch gekennzeichnet, dass**
jedem Lichtmodul (13, 130) eine eigene Steuerleitung (21, 22, 23, 24; 210, 220) zugeordnet ist und/oder mehrere oder alle Lichtmodule an einer Steuerleitung angeschlossen sind.

5. Lichterkette nach einem der vorhergehenden Ansprüche,
**dadurch gekennzeichnet, dass**
die Lichterkette so ausgebildet ist, dass über die Steuerleitung eine variabel einstellbare elektrische Spannung bereit gestellt wird und/oder eine an der Steuerleitung einstellbare elektrische Spannung im Bereich von 0 V bis 100 V, insbesondere 0 bis 20 V, vorzugsweise 0 bis 10 V variierbar ist.

6. Lichterkette nach einem der vorhergehenden Ansprüche,
**dadurch gekennzeichnet, dass**
die Schaltungen mindestens eines Teils der Lichtmodule (13, 130) parallel zueinander an den Versorgungsleitungen zur Energieversorgung und/oder der Steuerleitung angeordnet sind.

7. Lichterkette nach einem der vorhergehenden Ansprüche,
**dadurch gekennzeichnet, dass**
die Lichterkette eine Steuer- und/oder Regelungseinrichtung umfasst.

8. Lichterkette nach einem der vorhergehenden Ansprüche,
**dadurch gekennzeichnet, dass**
die Lichterkette so ausgebildet ist, dass die Lichtmodule (13, 130) einzeln oder in Gruppen gesteuert und/oder geregelt werden und/oder dass ein Lauflicht erzeugbar ist.

9. Lichterkette nach einem der vorhergehenden Ansprüche,
**dadurch gekennzeichnet, dass**
die Lichterkette Sensoren umfasst und/oder die Lichterkette und/oder einzelne Lichtmodule Lichtquellen (14, 140) unterschiedlicher Farbe umfassen und/oder die Lichtquelle (14, 140) durch eine LED (Licht emittierende Diode) gebildet ist.

10. Lichterkette nach einem der vorhergehenden Ansprüche,
**dadurch gekennzeichnet, dass**
die Steuerleitung (21, 22, 23, 24; 210, 220) mit einer variabel einstellbaren Spannungsquelle verbunden ist und/oder ein Anschluss der elektrischen Energieversorgung mit einem Außenleiter einer Spannungsquelle als erste Versorgungsleitung und der andere Anschluss mit einem Neutralleiter als zweite Versorgungsleitung verbunden ist.

11. Lichterkette nach einem der vorhergehenden Ansprüche,
**dadurch gekennzeichnet, dass**
die Schaltung mit einem Operationsverstärker (70) und einem Transistor (80) ausgebildet ist, wobei der Transistor (80) mit seiner Basis mit dem Ausgang des Operationsverstärkers verbunden ist, wobei der Emitter (83) des Transistors mit dem negativen Eingang (71) des Operationsverstärkers rückgekoppelt ist und der positive Eingang (72) des Operationsverstärkers mit einer variabel einstellbaren Spannungsquelle verbunden ist.

12. Schaltung für das Dimmen mindestens einer Lichtquelle (61, 62, 63, 64), insbesondere LED (Licht emittierende Diode), mit einem Operationsverstärker (70) und einem Transistor (80),
**dadurch gekennzeichnet, dass**
der Transistor (80) mit seiner Basis mit dem Ausgang des Operationsverstärkers verbunden ist, wobei der Emitter (83) des Transistors mit dem negativen Eingang (71) des Operationsverstärkers rückgekoppelt ist und der positive Eingang (72) des Operationsverstärkers mit einer variabel einstellbaren Spannungsquelle verbunden ist.

13. Schaltung nach Anspruch 11 oder 12,
**dadurch gekennzeichnet, dass**
der Operationsverstärker (70) mit einem seiner Versorgungsanschlüsse an dem Außenleiter einer Spannungsquelle angeschlossen ist, an welchem parallel hierzu der Kollektor des Transistors und die wenigstens eine Lichtquelle einerseits und der negative Eingang des Operationsverstärkers mit einem Eingangswiderstand andererseits geschaltet sind.

14. Schaltung nach einem der Ansprüche 11 bis 13,
**dadurch gekennzeichnet, dass**
ein Abschlusswiderstand (55) in Reihe zur Parallelschaltung von Eingangswiderstand (53) des Operationsverstärkers und Lichtquelle (61, 62, 63, 64) geschaltet ist.

15. Schaltung nach einem der Ansprüche 11 bis 14,
**dadurch gekennzeichnet, dass**
der positive Eingang des Operationsverstärkers mit einer Spannungsteilerschaltung aus mindestens zwei Ohmschen Widerständen (51, 52) verbunden ist.
